# EUROPÄISCHE PATENTANMELDUNG

(11) **EP 3 246 294 A1**
(43) Veröffentlichungstag der Anmeldung: **22.11.2017**
(21) Anmeldenummer: 16170076.0
(22) Anmeldetag: 18.05.2016
(51) Int. Cl.: C02F 11/12, C02F 11/14, C02F 101/20

(54) **SCHLAMMAUFBEREITUNGSANLAGE ZUM ENTWÄSSERN VON SCHLAMM**

(71) Anmelder: AQUARIUS Water Management AG, 6390 Engelberg (CH)
(72) Erfinder: FELSKOWSKY, Bruno, 8156 Oberhasli (CH)
(74) Vertreter: Rothkopf, Ferdinand

(57) **Zusammenfassung**

Eine Schlammaufbereitungsanlage (38) zum Entwässern von Schlamm, die mindestens einem ersten mobilen Teilgerät (32) umfasst, wobei das erste mobile Teilgerät einen Partikelabscheider (46) zum Abscheiden grober Partikel z.B. einen Trommelsieb und einen Schlammabscheider (56), der bevorzugt als Kanal (58) mit einer Zugabeeinrichtung (62) zum Zugeben eines Fällungsmittels ausgebildet ist.

## Beschreibung

### Hintergrund der Erfindung

Die Erfindung betrifft eine Schlammaufbereitungsanlage, insbesondere zum Entwässern von Schlamm, mit mindestens einem ersten mobilen Teilgerät.

Damit Schlämme kostengünstig entsorgt bzw. beseitigt werden können, ist es erforderlich diese zu entwässern und damit ihr Volumen zu reduzieren. Für die Volumenreduzierung gibt es vielerlei Ansätze und Einzelprozesse, die zwar einzeln bekannt sind, aber nur in gekonnter Kombination effizient nutzbar sind.

Darüber hinaus besteht bei der Schlammentwässerung die Problematik, dass die Speicherstellen, in denen sich der jeweils zu entwässernde Schlamm befindet, oftmals weit verstreut liegen. Bekannte Schlammaufbereitungsanlagen sind daher oftmals mobil gestaltet, also beweglich und nicht etwa stationär. Um mit derart mobilen Schlammaufbereitungsanlagen effektiv arbeiten zu können ist es wichtig, dass diese richtig einfach zu transportieren, einfach auf- und abzubauen und zugleich einfach zu betreiben sind. Bewegliche Anlagen sind nur dann effizient, wenn sie vergleichsweise wenig Bauraum, wenig Gewicht und wenig Energiebedarf für den Betrieb aufweisen.

### Zugrundeliegende Aufgabe

Der Erfindung liegt die Aufgabe zugrunde eine Schlammaufbereitungsanlage zu schaffen, die besonders vielseitig verwendbar ist und zugleich den oben genannten Anforderungen gerecht wird.

### Erfindungsgemäße Lösung

Diese Aufgabe ist erfindungsgemäß mit einer Schlammaufbereitungsanlage mit mindestens einem ersten mobilen Teilgerät geschaffen, bei der das erste mobile Teilgerät einen Partikelabscheider und einen Schlammabscheider, insbesondere mit einem Schwermetallabscheider, umfasst.

Die Schlammaufbereitungsanlage gemäß der Erfindung ist gezielt in mobile Teilgeräte unterteilt, bei denen in einem der Teilgeräte ein Partikelabscheider und ein Schlammabscheider mit wahlweisem Schwermetallabscheider kombiniert sind. Die derartige Kombination einer Partikelabscheidung mit einem Schlammabscheider und wahlweiser Schwermetallabscheidung in einem einzigen mobilen Teilgerät bewirkt eine besonders kompakt zu bauende, relativ einfach zu transportierende und zugleich sehr energiesparend zu betreibende Gesamtanlage.

Das erfindungsgemäße mobile Teilgerät kann besonders effizient mit weiteren Teilgeräten kombiniert werden, wobei dann mit besonders wenigen und damit wiederum einfach und kostengünstig arbeitenden Geräten gearbeitet werden kann. Die erfindungsgemäße Schlammaufbereitungsanlage ist ganz bewusst in gezielter Weise modular aufgebaut und dadurch leicht transportierbar. Sie kann weltweit einfach eingesetzt werden und ermöglicht während dieser Einsätze eine leicht veränderbare Anpassung an die jeweils vorliegenden Bedingungen und Anforderungen der Schlammaufbereitung, indem zum Verbinden der einzelnen Teilgeräte bzw. Module bewegliche Schlauchverbindungen eingesetzt werden. Die Anlage weist dabei besonders kurze Installationszeiten und Deinstallationszeiten auf. Die erfindungsgemäße Schlammaufbereitungsanlage bedarf am Einsatzort nur eines geringen Platzbedarfs. Sie kann ökologisch sinnvoll und umweltfreundlich betrieben werden. Besonders vorteilhaft ist dabei das erfindungsgemäße erste mobile Teilgerät derart gestaltet, dass es in einem herkömmlichen Seecontainer unterzubringen ist.

Mit der erfindungsgemäßen Schlammaufbereitungsanlage ist es möglich auch Schwermetalle abzuscheiden. Diese werden gemäß der erfindungsgemäßen Lösung insbesondere in einem abgetrennten Schlamm ausgeschieden. Anders ausgedrückt kann der Schwermetallabscheider auch als Schlammabscheidung von mit Schwermetall versetztem Schlamm bezeichnet werden. Der Schlamm wird dazu erst nach der erfindungsgemäßen Partikelabscheidung abgeschieden. Bei der erfindungsgemäßen Partikelabscheidung werden Partikel, insbesondere Steine und Sand mit einem Durchmesser von vorzugsweise mehr als 1 mm abgeschieden.

Bei einer vorteilhaften Weiterbildung der erfindungsgemäßen Schlammaufbereitungsanlage ist der Schwermetallabscheider mit einem Abscheiderkanal zum Absetzen von Schlamm versehen, bevorzugt mit einer schlangenförmigen Kanalführung im Abscheiderkanal, besonders bevorzugt mit einer spiralförmigen Kanalführung im Abscheiderkanal. Ein derartiger Abscheiderkanal weist einen besonders geringen Platzbedarf auf. Während des Absetzvorgangs werden vorteilhaft der pH-Wert, die Temperatur, die Leitfähigkeit, der Sauerstoffgehalt und/oder die Trübung des verarbeiteten Schlamms gemessen und die Messungen werden bei der Verarbeitung des zu entwässernden Schlammes berücksichtigt.

Der Schwermetallabscheider im Wasser-/Schlammgemisch ist ferner bevorzugt mit einer Zugabeeinrichtung zum Zugeben eines Fällungsmittels bzw. eines Flockungsmittels versehen, bevorzugt eines flüssigen, organischen Polymers/Copolymers und/oder eines pulverförmigen, anorganischen Salzes, welches zuvor im Wasser gelöst und angesetzt worden ist, besonders bevorzugt eines anionischen und/oder kathionischen Flockungsmittels. Flockungsmittel sind Stoffe oder Stoffgemische, welche die Ausfällung gelöster/disperser Stoffe <0.5 µm zu unlöslichen Feststoffen in Form von Flocken bewirken. Als anorganische Flockungs-/Fällungsmittel dienen z.B. Koagulanten, wie Eisen(III)sulfat FeSO₄*7H20, Ei- 10 sen(III)chlorsulfat FeClSO₄, Eisen(III)chlorid FeCl₃*6H₂0, Aluminium(III)sulfat Al2(SO4)3*18H20, Magnesiumchlorid MgCl₂ oder organische Flokkulanten/Flockungsmittel, wie Polymere oder Copolymere auf der Basis von Acrylamiden bzw. Polyacrilamiden. Fällungsmittel dienen insbesondere auch zum Entfernen von Sulfiden oder Phosphaten. Mit Fällung bzw. Präzipitation wird auch allgemein das Ausscheiden eines gelösten Stoffes aus einer Lösung bezeichnet. Das Ausscheiden erfolgt als Niederschlag in Form von amorphen Flocken oder kristallinem Material. Die Niederschläge der ausgefällten Feststoffe sind zunächst meist mikrokristallin oder amorph. Durch Umkristallisation kann eine stabilere Kristallmodifikation erfolgen. Oft vergrößern sich diese Teilchen durch zusätzliche Agglomeration. Dadurch lassen sie sich besser filtrieren oder bilden einen Bodensatz. Neben der Fällung mit Fällungsmitteln wird hier sinngemäß auch eine Entfernung von kolloidal gelösten Inhaltsstoffen mittels Flockung unter Anwendung von Flockungsmitteln oder auch Flockungshilfsmitteln verstanden.

Darüber hinaus ist vorteilhaft die Schlammaufbereitungsanlage mit einer Rühreinrichtung zum Aufrühren des Fällungsmittels zu versehen, bevorzugt mit einem Flügelwerk und/oder einem statischen Mischer. Die Rühreinrichtung führt zu einem Umwälzen des zu entwässernden Schlamms und einer verbesserten Durchmischung von Schlamm und Fällungsmittel.

Die erfindungsgemäße Schwermetallabscheidung ist bevorzugt auch mit einer Schneckeneinrichtung zum Abtransport von Schlamm aus der Schwermetallabscheidung versehen, bevorzugt mit einer Längsschnecke. Die Schneckeneinrichtung dient insbesondere dazu einen sich im genannten Abscheiderkanal ergebenden Bodensatz abzutransportieren. Mit dem abtransportierten Schlamm-/ Wassergemisch werden die darin erfindungsgemäß gebundenen Schwermetalle mit abtransportiert. Das zurückbleibende Schlamm-/ Wassergemisch wird erfindungsgemäß vorteilhaft zu einer Entwässerungseinrichtung gefördert und dort werden die abgesetzten Schlammrückstände aus dem Restwasser abgeschieden.

Der Partikelabscheider der erfindungsgemäßen Schlammaufbereitungsanlage ist vorzugsweise mit einer Rezirkulationseinrichtung zum Rezirkulieren von Restwasser versehen. Mittels des rezirkulierten Wassers können insbesondere Rückstände und Ablagerungen an der Partikelabscheidung weggewaschen werden.

Ferner ist der Partikelabscheider vorzugsweise zweistufig gestaltet, zum Abscheiden feiner Partikel und zum Abscheiden grober Partikel, wobei die groben Partikel bevorzugt mittels einer Trommel oder eines Rüttelsiebs und/oder die feinen Partikel mittels einer Schnecke oder eines Hebewerks ausgetragen werden. Grobe Partikel sind dabei insbesondere Steine, wobei vorteilhaft solche groben Partikel abgeschieden werden, die einen Durchmesser von mehr als 2,5 mm aufweisen. Feine Partikel sind insbesondere Sandkörner, wobei die Sandkörner insbesondere einen Durchmesser von mehr als 1 mm und weniger als 2,5 mm aufweisen. Bei der derartigen Lösung ist in nur einem mobilen Teilgerät ein dreistufiger Prozess geschaffen, bei dem zunächst grobe Partikel, dann feine Partikel und schließlich (insbesondere geflockte) Schlammpartikel aus dem Restwasser abgeschieden werden.

Bei der Schlammaufbereitungsanlage gemäß der Erfindung ist auch vorteilhaft ferner ein Prozesswassertank vorgesehen, insbesondere im ersten mobilen Teilgerät. Der Prozesswassertank befindet sich vorzugsweise besonders platzgünstig unter dem oben genannten Abscheiderkanal. Das dabei zwischengespeicherte Prozesswasser kann in der erfindungsgemäßen Schlammaufbereitungsanlage vielseitig eingesetzt werden, insbesondere um Teilgeräte bzw. Teileinrichtungen der Schlammaufbereitungsanlage während ihres Betriebs kontinuierlich zu reinigen.

Die erfindungsgemäße Schlammaufbereitungsanlage umfasst darüber hinaus vorteilhaft ein zweites mobiles Teilgerät mit einer Entwässerungseinrichtung zum Entwässern von Restwasser aus dem ersten mobilen Teilgerät, bevorzugt mit einer Siebbandpresse oder einer Kammerfilterpresse. Die genannten Pressen können vorteilhaft mit Prozesswasser gereinigt werden, das insbesondere durch das erfindungsgemäße erste mobile Teilgerät rezirkuliert wird. Alternativ oder zusätzlich kann auch eine Zentrifuge zur Anwendung kommen. Eine dabei erzielte Eindickungsqualität kann bei bestimmten Anwendungsfällen vorteilhaft weiter verbessert werden, indem Chemikalien in flüssiger oder fester Form zugegeben werden. Das Restwasser wird vorzugsweise in Klarwasser und einen Filterkuchen getrennt, der insbesondere einen Trockensubtanzgehalt (TS) von 50 % bis 80 % aufweist.

Schließlich ist bei der Schlammaufbereitungsanlage auch ein drittes mobiles Teil mit einer Absaugeinrichtung zum Absaugen des zu entwässernden Schlamms aus einem Schlammspeicher, insbesondere einem Speicherteich, vorgesehen. Die Absaugeinrichtung ist vorzugsweise mit einem Saugpumpengerät und/oder mit einem daran angeschlossenen Baggergerät mit Saugpumpengerät gestaltet. Das Saugpumpengerät dient zum Ansaugen des zu entwässernden Schlammes und zum Fördern zu dem erfindungsgemäßen ersten mobilen Teilgerät. Das Baggergerät ist vorzugsweise an einem amphibischen Fahrzeug montiert. Das Baggergerät weist vorteilhaft verschiedene Teile zur Bearbeitung des Gewässers vor der Schlammentnahme, z.B. eine Schneidvorrichtung für Pflanzen, insbesondere Seegras und Schilf, Greifer zur Aufnahme von Grobmaterial und Baggerschaufeln 20 etc. auf. Der bewegliche Vorderteil beim Saugpumpengerät dient insbesondere zum Aufwühlen und Bewegen des zu entwässernden Schlamms innerhalb des Schlammspeichers.

Bei der erfindungsgemäßen Schlammaufbereitung handelt es sich also bei dem abgepumpten Wasser-/Schlammgemisch in der Regel um eine Suspension (Flüssigkeit-Feststoffe), welche auch nicht dispergierte Grobteile, wie: Steine, Holzteile, Pflanzenfasern, Wurzeln, Sand, Kunststoffe, etc. enthalten kann. Diese Grobteile oder losen, getrennten Teile werden vorab mit dem Partikelabscheider, insbesondere einem Trommel- / Rüttelsieb und dem nachgeschalteten Schlammabscheider, insbesondere einem Sandabscheider, aus der Suspension ausgesiebt/abgesetzt. Die Trennung der dispersen Partikel aus der Suspension vom Dispersionsmittel (Wasser) wird als Absetzen bezeichnet und erfolgt vorzugsweise mittels Zusatzstoffen (Flocken grösser, stabiler und schwerer, sodass sich die Absetzgeschwindigkeit erhöht. Heute kommen ausschließlich Polymere oder Copolymere auf der Basis von Acrylamid bzw. Polyacrilamide (PAA) mit kationischen oder anionischen Eigenschaften zum Einsatz.

### Kurzbeschreibung der Zeichnungen

Nachfolgend wird ein Ausführungsbeispiel einer erfindungsgemäßen Lösung anhand der beigefügten schematischen Zeichnungen näher erläutert. Es zeigt:
- Fig. 1: ein stark vereinfachtes Ablaufdiagramm einer erfindungsgemäßen Schlammaufbereitungsanlage,
- Fig. 2: eine Prozessdiagramm einer erfindungsgemäßen Schlammaufbereitungsanlage,
- Fig. 3: eine Seitenansicht einer erfindungsgemäßen Schlammaufbereitungsanlage mit dessen ersten und zweiten mobilen Teilgerät,
- Fig. 4: eine perspektivische Ansicht des ersten mobilen Teilgeräts gemäß Fig. 3 und
- Fig. 5: einen Längsschnitt und eine Draufsicht eines Absetzbehälters des ersten mobilen Teilgeräts gemäß Fig. 4.

### Detaillierte Beschreibung des Ausführungsbeispiels

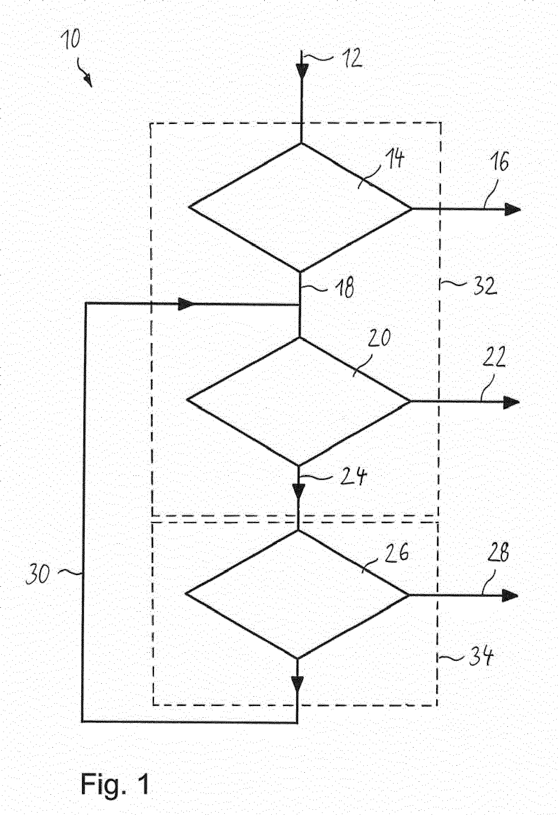

In Fig. 1 ist ein Ablaufdiagramm 10 dargestellt, welches die wesentlichen Schritte des Ablaufs der erfindungsgemäßen Schlammentwässerung exemplarisch veranschaulicht. Der Ablauf beginnt mit einem Zufluss 12, bei dem mit Schwermetallen versetzter Schlamm bzw. ein schlammartiges bzw. teigiges Gut zu einem Schritt 14 der Partikelabscheidung gefördert wird. An der Partikelabscheidung werden grobe Partikel, wie Steine und Sandkörner aus dem Schlamm entfernt und mittels einer Partikelabgabe 16 aus dem Hauptstrom von Schlamm abgeschieden. Der Hauptstrom gelangt mittels einer ersten Weitergabe 18 zu einem Schritt 20 der Schwermetallabscheidung. An der Schwermetallabscheidung werden die im Schlamm enthaltenen Schlammteilchen bzw. Sedimentteilchen von Reinwasser getrennt, welches zu einer Reinwasserabgabe 22 geführt wird. In den Schlammteilchen werden zugleich jene Schwermetalle gebunden, welche im zugeleiteten Schlamm enthalten waren. In einer zweiten Weitergabe 24 werden die abgeschiedenen Schlammteilchen zu einem Schritt 26 der Entwässerung gefördert. An der Entwässerung wird weiteres Wasser abgeschieden, so dass die Schlammteilchen und die darin enthaltenden Schwermetalle zu einer Feststoffabgabe 28 gelangen. Das dabei abgeschiedene Wasser wird mittels eines Rückflusses 30 vor den Schritt 26 rezirkuliert.

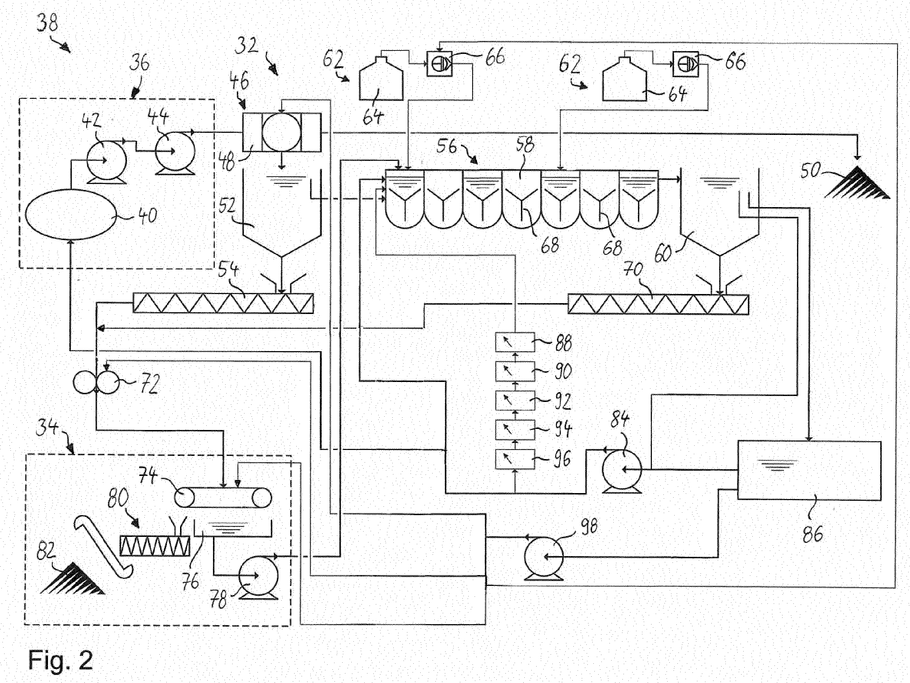

Wie in Fig. 1 und auch in Fig. 2 veranschaulicht ist, sind der Schritt 14 der Partikelabscheidung und der Schritt 20 der Schlammabscheidung in einem ersten mobilen Teilgerät 32 zusammengefasst. Dieses Teilgerät 32 bildet, wie nachfolgend noch weiter erläutert wird, eine als solche transportierbare Einheit, die separat bewegt und versetzt werden kann. Dieses erste mobile Teilgerät 32 ist insbesondere derart gestaltet, dass es in einem herkömmlichen Seecontainer Platz findet und auch mittels eines solchen Seecontainers auf einem Lastkraftwagen sowie auch einem Frachtschiff transportiert werden kann.

Der Schritt 26 der Entwässerung ist ebenfalls als eigenes, zweites mobiles Teilgerät 34 gestaltet. Auch dieses Teilgerät 34 ist separat transportierbar.

Ferner ist gemäß der Fig. 2 ein drittes mobiles Teilgerät 36 vorgesehen, welches vorliegend nicht im Detail dargestellt ist. Das dritte mobile Teilgerät 36 ist vorzugsweise als ein Amphibienfahrzeug gestaltet und umfasst insbesondere eine Absaugeinrichtung zum Absaugen von zu entwässerndem Schlamm aus einem Schlammteich oder dergleichen. Die Absaugeinrichtung weist dazu ein Saugpumpengerät zum Ansaugen und Weiterpumpen von Schlamm auf. Ferner ist an dem dritten mobilen Teilgerät 36 vorzugsweise ein Baggergerät mit einem beweglichen Vorderteil beim Saugpumpengerät vorgesehen, mittels dessen Schlamm im Schlammteich aufgewühlt werden kann. Das Baggergerät ist dazu vorteilhaft auch mit verschiedenen Teilen zur Bearbeitung des Gewässers vor der Schlammentnahme, z.B. einer Schneidvorrichtung für Seegras und Schilf, einem Greifer zur Aufnahme von Grobmaterial und einer Baggerschaufeln versehen.

Auf diese Weise ist insgesamt eine Schlammaufbereitungs38 geschaffen, die in Fig. 2 weiter detailliert dargestellt ist. Wie zu sehen ist, wird mittels des mobilen Teilgeräts 36 zu entwässernder Schlamm aus einem Schlammspeicher 40 entnommen und mittels einer ersten Pumpeneinrichtung 42 sowie einer zweiten Pumpeneinrichtung 44, welche bei langen Verbindungsstrecken zu einem Partikelabscheider 46 gefördert.

Der Partikelabscheider 46 ist im Prozess der Schlammentwässerung zum Schritt 14 der Partikelabscheidung und damit zum ersten mobilen Teilgerät 32. Der Partikelabscheider 46 ist mit einem Trommelsieb 48 zum Abscheiden von Steinen mit einem Durchmesser von größer 2,5 mm aus dem zu entwässernden Schlamm gestaltet. Die Steine werden aus dem Trommelsieb 48 als erste Fraktion 50 abgeführt und separiert. Zum Partikelabscheider 46 gehört ferner ein dem Trommelsieb 48 nachgeschaltetes Absetzbecken 52, in dem sich Sandkörner absetzen können. Diese Sandkörner aus dem zu entwässernden Schlamm werden von einer Schnecke 54 aus dem Absetzbecken 52 herausgehoben. Jenes Wasser aus dem Absetzbecken 52, welches sich in dessen oberen Abschnitt befindet, wird zu einem Schlammabscheider bzw. Schwermetallabscheider 56 geleitet. Der Schwermetallabscheider 56 ist ebenfalls ein Bestandteil des ersten mobilen Teilgeräts 32. Der Schwermetallabscheider 56 ist mit einem Abscheiderkanal 58 gestaltet, der mehrere aufeinander folgende Kanalabschnitte umfasst und durch den hindurch der weiter zu entwässernde Schlamm gefördert wird. Auf den Abscheiderkanal 58 folgt ein weiteres Absetzbecken 60 für Schlamm. In diesem Absetzbecken 60 können sich Schlammteilchen mit darin gebundenen Schwermetallen absetzen.

Damit die Schwermetalle in bzw. an den Schlammteilchen gebunden werden, sind mindestens zwei Behälter 64 für je ein Flockungs- bzw. Fällungsmittel mit je einer zugehörigen Dosierstation 66 sowie mehrere Rühreinrichtungen 68 vorgesehen. Mittels der Dosierstationen 66 wird das Flockungs- bzw. Fällungsmittel aus den Behältern 64 an zwei Stellen des Abscheiderkanals, einer vorderen und einer mittleren Stelle, gefördert. Die Rühreinrichtungen 68 befinden sich ebenfalls im Abscheiderkanal 58, so dass mit ihnen das zugeführte Flockungs- bzw. Fällungsmittel mit dem sich dort befindenden Schlamm verrührt und gemischt werden kann. Auf diese Weise werden mittels des Flockungs- bzw. Fällungsmittels die Schwermetalle an die Schlammteilchen gebunden. Die sich dann im Absetzbecken 60 mittels der Schwerkraft absetzenden Schlammteilchen werden mittels einer Schneckeneinrichtung 70 aus dem Absetzbecken 60 abgeführt. Dabei kann in das Absetzbecken 60 zugleich mittels der Schnecke 54 auch der zuvor abgeschiedene Sand eingeführt werden, so dass dieser gemeinsam mit den Schlammteilchen und den Schwermetallen aus dem Absetzbecken 60 abgeführt werden kann. Alternativ können die separierten Sandkörner und die separierten Schlammteilchen samt Schwermetallen außerhalb des Schwermetallabscheiders 56 zusammengeführt werden, so wie es in Fig. 2 links dargestellt ist.

Das Abführen der Schlammteilchen und der Sandkörner erfolgt mittels einer Schlammpumpe 72, welche diese festen und pastösen Stoffe zu einer Siebbandpresse 74 fördert. Die Siebbandpresse 74 ist Teil des zweiten mobilen Teilgeräts 34. Unter der Siebbandpresse 74 befindet sich ein Auffangbecken 76 für Restwasser, welches mittels einer Permeatpumpe 78 im Sinne des zur Fig. 1 genannten Rückflusses 30 in den Schwermetallabscheider 56 zurückgefördert wird. Zugleich wird an der Siebbandpresse 74 mittels einer Fördereinrichtung 80 eine zweite, feste Fraktion 82 abgeschieden. Diese zweite Fraktion 82 umfasst als eine Art Filterkuchen Schlammteilchen und Sandkörner mit einem Durchmesser von kleiner 2,5 mm und weist einen Trockensubstanzgehalt (TS-Gehalt) von mehr als 60% auf.

An das Absetzbecken 60 ist ferner eine Umwälzpumpe 84 als Rezirkulationseinrichtung angeschlossen, welche Oberflächenwasser aus dem Absetzbecken 60 abführt. Alternativ zum Oberflächenwasser aus dem Absatzbecken 60 kann mittels der Umwälzpumpe 84 auch Wasser aus einem Prozesswassertank 86 gefördert werden. Der Prozesswassertank 86 wird dazu ebenfalls mit Restwasser aus dem Absetzbecken 60 gespeist. Das Restwasser wird von der Umwälzpumpe 84 einerseits in den Schlammspeicher 40 zurückgefördert und anderseits in den Schwermetallabscheider 56 rezirkuliert. Beim Rezirkulieren wird das Oberflächenwasser einmal direkt in den Abscheiderkanal 58 geleitet und einmal indirekt durch mehrere Messeinrichtungen gefördert. Diese Messeinrichtungen sind eine Messeinrichtung für Temperatur 88, eine Messeinrichtung für Leitfähigkeit 90, eine Messeinrichtung für Sauerstoffgehalt 92, eine Messeinrichtung für Trübung 94 und eine Messeinrichtung für ph-Wert 96. Mittels der Messeinrichtungen werden die genannten Kenngrößen des Oberflächenwassers aus dem Absetzbecken 60 jeweils gemessen und in Abhängigkeit der Messung die Schlammaufbereitungsanlage 38 gesteuert.

An den Prozesswassertank 86 ist ferner eine Spülpumpe 98 angeschlossen, mittels der Oberflächenwasser zum Spülen an das Trommelsieb 48, an die Schlammpumpe 72 und an die Siebbandpresse 74 gefördert werden kann. Ferner kann mittels der Spülpumpe 98 Oberflächenwasser an zumindest eine der Dosierstationen 66 gefördert werden.

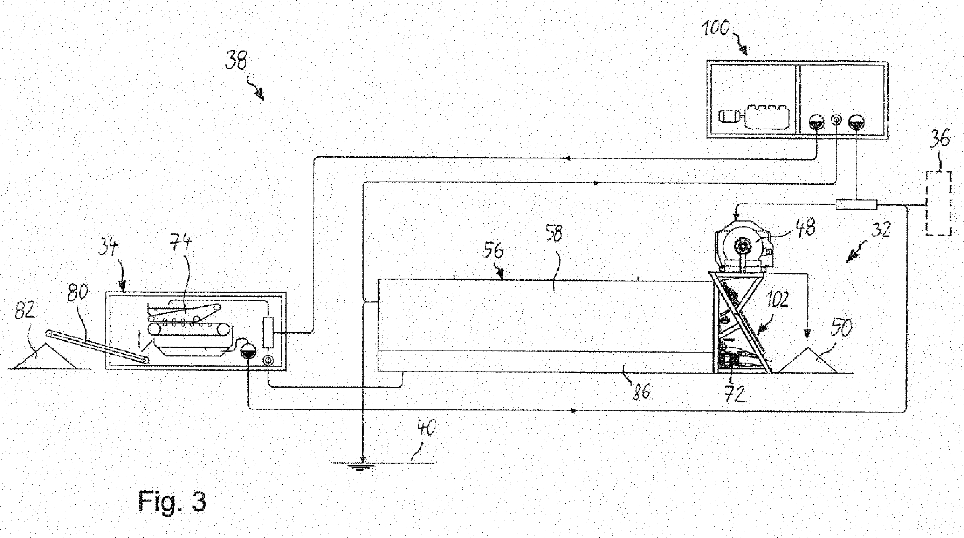

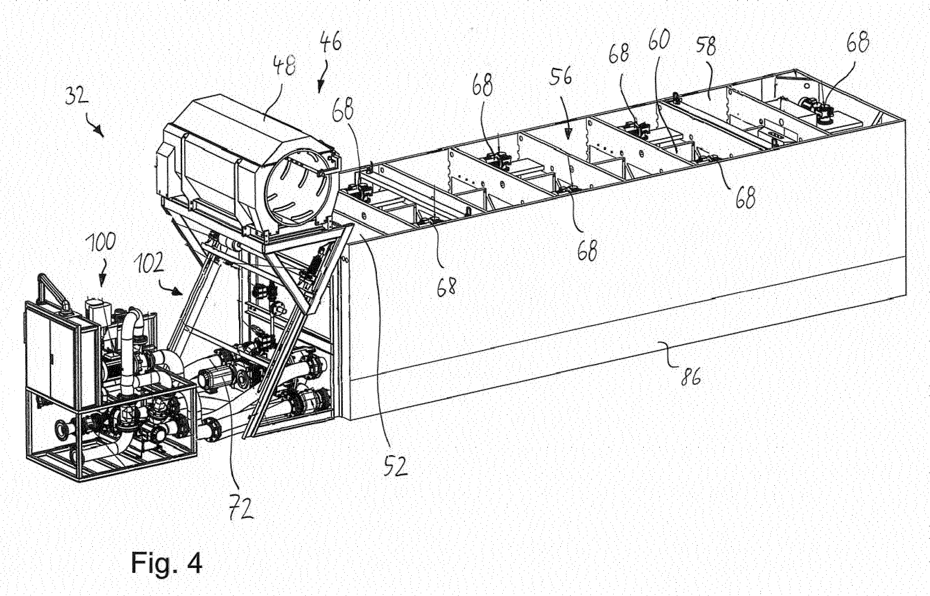

In den Fig. 3 bis 5 ist weiter veranschaulicht, wie die Schlammaufbereitungsanlage 38 gemäß den Fig. 1 und 2 konstruktiv vorteilhaft zu realisieren ist. Dabei ist gezeigt, dass an dem ersten mobilen Teilgerät 32 der Schwermetallabscheider 56 als eine langgestreckte Baueinheit gestaltet ist, die in einem herkömmlichen Seecontainer unterzubringen ist. Der Abscheiderkanal 58 ist U-förmig um das dabei zentral angeordnete Absetzbecken 60 angeordnet, wobei hinsichtlich des Stromes an Schlamm insgesamt eine spiralförmige Kanalführung geschaffen ist. Das Absetzbecken 52 befindet sich an dem "offenen" Endbereich des U-förmigen Abscheiderkanals 58 und erstreckt sich dort über die Breite des Schwermetallabscheiders 56. An diesem Ende des Schwermetallabscheiders 56 befindet sich auch eine Pumpstation 100, in der insbesondere die Umwälzpumpe 84 und die Spülpumpe 98 untergebracht sind. Das Trommelsieb 48 befindet sich auf einer Hebeeinrichtung 102 ebenfalls an diesem Ende. Es kann mittels der Hebeeinrichtung 102 an den oberen Rand des Absetzbeckens 52 angehoben werden, so dass feinkörniges und flüssiges Material aus dem Trommelsieb 48 aufgrund von Schwerkraft direkt in das Absetzbecken 52 gelangen kann. Mittels der Hebeeinrichtung 102 kann das Trommelsieb 48 aber auch zwischen den Schwermetallabscheider 56 und die Pumpstation 100 abgesenkt werden, so dass das erste mobile Teilgerät 32 in dieser Anordnung in einen Seecontainer eingeschoben werden kann.

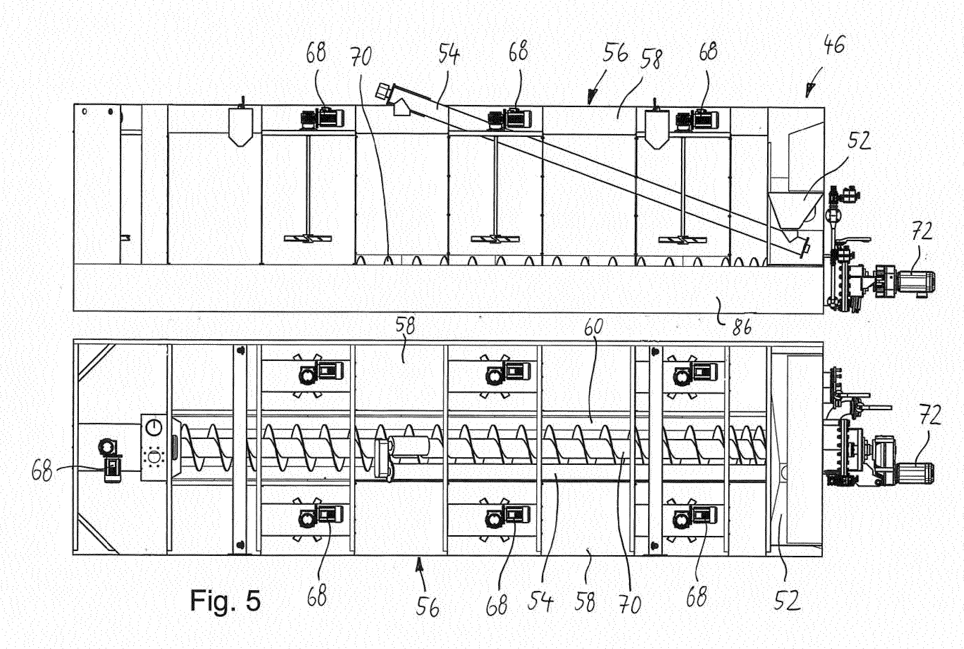

In dem Absetzbecken 60 im Zentrum des spiralförmigen, insbesondere U-förmigen Abscheiderkanals 58 ist gemäß Fig. 5 oben wahlweise die Schnecke 54 derart eingesetzt, dass sie festes Material, insbesondere sandiges Material, vor allem mit einer Korngröße größer als 0,1 mm, aus dem Absetzbecken 52 nach oben hin austragen und in das Absetzbecken 60 auslassen oder wahlweise seitlich aus der Aufbereitungsanlage fördern kann. Das ausgelassene Material gelangt in das Absetzbecken 60 und in die dort am Boden angeordnete Schneckeneinrichtung 70 ab. Von dieser Schneckeneinrichtung 70 wird es an das stirnseitige Ende des Absetzbeckens 60 gefördert, wo sich außenseitig die Schlammpumpe 72 befindet. Wahlweise kann das so gewonnene Sandmaterial auch seitlich aus der Aufbereitungsanlage gefördert werden.

Der Prozesswassertank 86 ist platzsparend als ein großer, flacher, kubischer Behälter unter dem Abscheiderkanal 58 und dem Absetzbecken 60 angeordnet und erstreckt sich dort über die gesamte Grundfläche dieser beiden Behälter.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Ablaufdiagramm
- 12: Zufluss
- 14: Schritt Partikelabscheidung
- 16: Partikelabgabe
- 18: erste Weitergabe
- 20: Schritt Schlammabscheidung bzw. Schwermetallabscheidung
- 22: Reinwasserabgabe
- 24: zweite Weitergabe
- 26: Schritt Entwässerung
- 28: Feststoffabgabe
- 30: Rückfluss
- 32: erstes mobiles Teilgerät
- 34: zweites mobiles Teilgerät
- 36: drittes mobiles Teilgerät
- 38: Schlammaufbereitungsanlage
- 40: Schlammspeicher
- 42: erste Pumpeinrichtung
- 44: zweite Pumpeinrichtung
- 46: Partikelabscheider
- 48: Trommelsieb für Steine
- 50: erste Fraktion
- 52: Absetzbecken für Sandkörner
- 54: Schnecke
- 56: Schlammabscheider bzw. Schwermetallabscheider
- 58: Abscheiderkanal
- 60: Absetzbecken für Schlamm
- 62: Zugabeeinrichtung für Fällungsmittel
- 64: Behälter für Fällungsmittel
- 66: Dosierstation für Fällungsmittel
- 68: Rühreinrichtung
- 70: Schneckeneinrichtung
- 72: Schlammpumpe
- 74: Siebbandpresse
- 76: Auffangbecken
- 78: Permeatpumpe
- 80: Fördereinrichtung
- 82: zweite Fraktion
- 84: Umwälzpumpe
- 86: Prozesswassertank
- 88: Messeinrichtung für Temperatur
- 90: Messeinrichtung für Leitfähigkeit
- 92: Messeinrichtung für Sauerstoffgehalt
- 94: Messeinrichtung für Trübung
- 96: Messeinrichtung für ph-Wert
- 98: Spülpumpe
- 100: Pumpstation
- 102: Hebeeinrichtung

## Patentansprüche

1. Schlammaufbereitungsanlage (38) mit mindestens einem ersten mobilen Teilgerät (32),
**dadurch gekennzeichnet, dass** das erste mobile Teilgerät (32) einen Partikelabscheider (46) und einen Schlammabscheider (56) umfasst.

2. Schlammaufbereitungsanlage nach Anspruch 1,
**dadurch gekennzeichnet, dass** der Schlammabscheider (56) mit einem Abscheiderkanal (58) zum Absetzen von Schlamm versehen ist, bevorzugt mit einer schlangenförmigen Kanalführung im Abscheiderkanal (58), besonders bevorzugt mit einer spiralförmigen Kanalführung im Abscheiderkanal (58).

3. Schlammaufbereitungsanlage nach Anspruch 1 oder 2,
**dadurch gekennzeichnet, dass** der Schlammabscheider (56) als Schwermetallabscheider mit einer Zugabeeinrichtung (62) zum Zugeben eines Fällungsmittels versehen ist, bevorzugt eines flüssigen Polymers und/oder eines pulverförmigen Salzes, besonders bevorzugt eines anionischen und/oder kathionischen Fällungsmittels.

4. Schlammaufbereitungsanlage nach Anspruch 3,
**dadurch gekennzeichnet, dass** der Schlammabscheider (56) mit einer Rühreinrichtung (68) zum Aufrühren des Fällungsmittels versehen ist, bevorzugt mit einem Flügelwerk und/oder einem statischen Mischer.

5. Schlammaufbereitungsanlage nach einem der Ansprüche 1 bis 4,
**dadurch gekennzeichnet, dass** der Schlammabscheider (56) mit einer Schneckeneinrichtung (70) zum Abtransport von Schlamm aus dem Schwermetallabscheider (56) versehen ist, bevorzugt mit einer Längsschnecke.

6. Schlammaufbereitungsanlage nach einem der Ansprüche 1 bis 5, **dadurch gekennzeichnet, dass** der Partikelabscheider (46) mit einer Rezirkulationseinrichtung (84) zum Rezirkulieren von Wasser versehen ist.

7. Schlammaufbereitungsanlage nach einem der Ansprüche 1 bis 6, **dadurch gekennzeichnet, dass** der Partikelabscheider (46) zweistufig gestaltet ist, zum Abscheiden feiner Partikel und grober Partikel, bevorzugt mit einem Trommelsieb (48) oder einem Rüttelsieb und/oder einer Schnecke (54) oder einem Hebewerk.

8. Schlammaufbereitungsanlage nach einem der Ansprüche 1 bis 7, **dadurch gekennzeichnet, dass** ferner ein Prozesswassertank (86) vorgesehen ist, insbesondere im ersten mobilen Teilgerät (32).

9. Schlammaufbereitungsanlage nach einem der Ansprüche 1 bis 8, **dadurch gekennzeichnet, dass** ein zweites mobiles Teilgerät (34) mit einer Entwässerungseinrichtung zum Entwässern von Restwasser aus dem ersten mobilen Teilgerät vorgesehen ist, bevorzugt mit einer Siebbandpresse (74) oder einer Kammerfilterpresse.

10. Schlammaufbereitungsanlage nach einem der Ansprüche 1 bis 9, **dadurch gekennzeichnet, dass** ein drittes mobiles Teil (36) mit einer Absaugeinrichtung zum Absaugen des zu entwässernden Schlamms aus einem Schlammspeicher (40) vorgesehen ist.
